# FASCICULE DE BREVET EUROPEEN

(11) **EP 0 462 028 B1**
(45) Date de publication et mention de la délivrance du brevet: **27.09.1995**
(21) Numéro de dépôt: 91420182.7
(22) Date de dépôt: 07.06.1991
(51) Int. Cl.: C03B 5/02, F27D 11/06, F27B 14/06, H05B 6/24, F27B 1/09, C03B 5/225

(54) **Four de fusion-affinage de verre**
Ofen zum Schmelzen und Raffinieren von Glas
Furnace for melting-refining glass

(30) Priorité: 12.06.1990 FR 9007541
(43) Date de publication de la demande: 18.12.1991
(73) Titulaire: C.F.E.I. (COMPAGNIE FRANCAISE D'ELECTROTHERMIE INDUSTRIELLE), F-38170 Seyssinet-Pariset (FR); ELECTRICITE DE FRANCE Service National, 75008 Paris (FR)
(72) Inventeur: Boen, Roger, F-30130 Pont Saint Esprit (FR); Tuaz, Frédéric, F-74170 Saint Gervais les Bains (FR); Paya, Bernard, F-77140 Montcourt-Fromonville (FR)
(74) Mandataire: de Beaumont, Michel

(56) Documents cités:
- EP-A- 0 176 897
- EP-A- 0 176 898
- CH-A- 250 315
- FR-A- 2 613 351

## Description

La présent invention concerne le domaine de la fabrication de verre de haute qualité.

Ces dernières années, de multiples propositions ont été faites pour fabriquer du verre de haute qualité dans des creusets à chauffage par induction directe. Un avantage principal du chauffage par induction directe est d'éviter tout contact entre la source d'énergie thermique et le verre en cours de fabrication.

Toutefois, avec les creusets traditionnels en matière réfractaire, ces techniques de chauffage par induction présentent des inconvénients car, aux températures élevées (1200 à 1600°C) mises en oeuvre, les constituants de la composition à partir de laquelle est formé le verre tendent à attaquer les matériaux réfractaires du creuset. Ce problème a été résolu par des creusets dits à paroi froide comprenant généralement des parois métalliques segmentées refroidies par circulation d'un fluide et l'on trouve dans la littérature de nombreux types de tels creusets froids. On parle également dans la littérature de four à induction du type à auto-creuset car, à la périphérique interne du four, contre les parois froides, se forme du verre solidifié qui peut être considéré comme constituant la paroi du creuset.

On constate dans ces fours à auto-creuset que la répartition des températures dans le mélange fondu, par exemple du verre, est hétérogène et qu'il se présente une température nettement plus faible au centre qu'à la périphérie (à l'exception de l'extrême périphérie où, comme cela à été indiqué, il se présente un phénomène d'auto-creuset, c'est à dire une solidification du verre au voisinage des parois froides). Ce phénomène, existant de façon générale, peut être sensiblement atténué si le brassage thermo-convectif est efficace, ce qui est le cas lorsque la viscosité du mélange fondu est suffisamment faible.

Cette hétérogénéité de la température du mélange fondu entraîne de nombreux inconvénients. L'un, évident, est que si l'on prélève sans précautions une partie du verre fondu, on n'obtiendra pas toujours un produit à la même température et ayant subi le même traitement. Un autre inconvénient est que, aux endroits de plus faible température, le verre est encore visqueux et se dégaze mal. Pour pallier le dernier inconvénient, on a proposé dans l'art antérieur, par exemple dans la demande de brevet français 2 613 351 de PPG INDUSTRIES INC., des systèmes où plusieurs fours fonctionnent en cascade, l'un ayant un rôle de préfusion, le deuxième un rôle de fusion, le troisième un rôle d'affinage (l'opération d'affinage ayant essentiellement une fonction de dégazage et d'homogénéisation). On arrive alors à des systèmes complexes à mettre en route et à arrêter dans des processus industriels à coulée continue.

Ainsi, un objet de la présente invention est de prévoir un système simple pouvant servir de four de fusion et d'affinage d'un verre ou matériau similaire.

Pour atteindre cet objet, la présente invention prévoit un four unique de fusion-affinage de verre dont la partie inférieure, non chauffée, comprend une paroi réfractaire fortement isolante et dont la partie supérieure est du type à paroi froide et est chauffée par induction, le fond étant également constitué d'un réfractaire.

Selon un mode de réalisation de la présente invention, le rapport entre la hauteur de la partie supérieure et la hauteur de la partie inférieure est compris entre 2/1 et 1/2.

Selon un mode de réalisation de la présente invention, la paroi interne de la partie inférieure déborde vers l'intérieur du four par rapport à la paroi interne de la partie supérieure au niveau du raccord entre ces deux parties et le raccordement entre les parties supérieure et inférieure est réalisé par emboîtage.

Selon un mode de réalisation de la présente invention les moyens de chauffage par induction sont propres à amener la partie supérieure à des températures pouvant dépasser 2000°C.

Ces objets, caractéristiques et avantages ainsi que d'autres de la présente invention seront exposés plus en détail dans la description suivante de modes de réalisation particuliers faite en relation avec les figures jointes parmi lesquelles :
la figure 1 représente une vue en coupe schématique longitudinale d'un four selon la présente invention ;
la figure 2 représentent une vue en coupe schématique transversale selon la ligne II-II de la figure 1 ; et
la figure 3 représente une vue en coupe schématique transversale selon la ligne III-III de la figure 1.

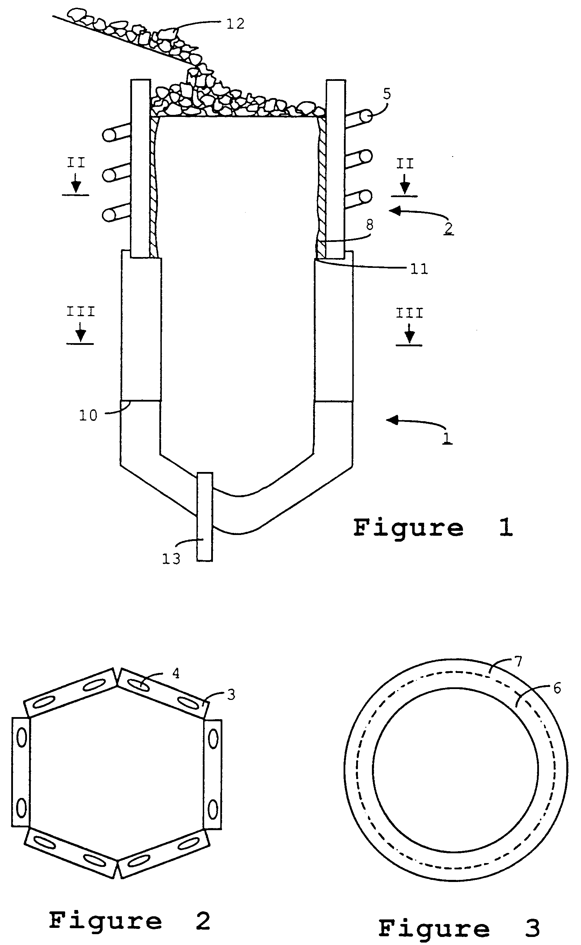

La figure 1 représente très schématiquement une vue en coupe d'un creuset de fusion et d'affinage selon la présente invention. La partie inférieure de ce creuset 1 a des parois en un matériau réfractaire et la partie supérieure 2 de ce creuset est du type à paroi froide. Cette partie haute est entourée d'un bobinage 5 alimenté en haute fréquence pour assurer un chauffage par induction.

La figure 2 représente schématiquement une vue en coupe de la partie haute où l'on peut voir des plaques de cuivre 3 munies de trous de circulation d'eau 4. Cette structure est présentée de façon fort schématique car elle est bien connue en elle-même.

La figure 3 représente une vue en coupe selon la ligne III-III de la figure 1. On peut y voir un matériau réfractaire 6 entouré d'un isolant 7, comme cela est connu.

Ainsi, le chauffage à induction agit seulement sur la partie supérieure du four le long des parois de laquelle on a figuré une zone de verre solidifié 8. Par contre, le flux de chauffage n'a que peu sinon pas d'influence sur la partie inférieure du four à induction qui, du fait de la forte isolation assurée par les parois réfractaires, se trouve à une température homogène, et donc se dégaze de façon satisfaisante relativement rapidement.

Cette partie inférieure 1 peut être constituée de plusieurs sections cylindriques empilées, comme cela est illustré par la ligne de séparation 10. Au niveau de l'assemblage, diverses gorges peuvent être prévues comme cela est connu de l'homme de l'art.

La partie supérieure 2 pourra être simplement posée sur la section supérieure de la partie inférieure 1, éventuellement en prévoyant une gorge. Selon un aspect de la présente invention, la paroi réfractaire déborde vers l'intérieur par rapport à la paroi froide comme cela est indiqué par la référence 11, pour éviter un glissement ou une chute du verre solidifié 8 vers le fond du creuset.

Le four selon la présente invention se prète à fonctionner en continu, un déversement d'une composition granulaire 12 étant assuré par une goulotte ou autre moyen prévu à sa partie supérieure et un soutirage étant assuré par une buse 13. Cette buse 13 peut, pour des raisons de qualité du verre, être disposée de façon décentrée par rapport à l'axe du creuset.

Comme cela est connu de l'homme de l'art, la mise en route de ce creuset pourra être assurée par un préchauffage, par exemple un préchauffage à la flamme, ou bien en introduisant initialement une composition préfondue dans le creuset. Ensuite, le chauffage à induction agissant sur la partie liquéfiée permet d'assurer le chauffage et le maintien à température. On notera que le fait de déverser une composition solide à la surface du creuset améliore l'isolement thermique (diminution des pertes par rayonnement) et rend le système peu polluant (absorption des gaz de réaction).

On a représenté en figure 1 un creuset à fond conique. Ceci ne constitue qu'un mode de réalisation de l'invention.

Un four expérimental a été fabriqué avec un diamètre interne de 350 millimètres, une hauteur de 400 millimètres pour la partie à paroi froide et une hauteur de 500 millimètres pour la partie à paroi réfractaire. Ce four a fourni des résultats satisfaisants dans un fonctionnement en continu et il apparaît, par extrapolation, qu'un four selon la présente invention conviendra bien à des fabrications industrielles de verre sur des fours de dimensions beaucoup plus grandes.

Par ailleurs, dans la description précédente on s'est référé à la fabrication de verre de haute qualité. La présente invention s'applique de la même manière à des matériaux similaires, relativement mauvais conducteurs de l'électricité et nécessitant un affinage, tels que céramiques, gels, polymères conducteurs.

De plus, la présente invention est susceptible de diverses variantes. Par exemple, les parois de la partie réfractaire inférieure du four pourront être munies d'un revêtement, par exemple en platine, pour éviter toute pollution. On pourra aussi associer au four selon l'invention des moyens de brassage.

## Revendications

1. Four de fusion-affinage de verre dont la partie inférieure (1), non chauffée, comprend une paroi réfractaire fortement isolante et dont la partie supérieure (2) est du type à paroi froide et est chauffée par induction, le fond étant également constitué d'un réfractaire.

2. Four de fusion-affinage selon la revendication 1, caractérisé en ce que le rapport entre la hauteur de la partie supérieure et la hauteur de la partie inférieure est compris entre 2/1 et 1/2.

3. Four de fusion-affinage selon la revendication 1, caractérisé en ce que la paroi interne de la partie inférieure déborde vers l'intérieur du four par rapport à la paroi interne de la partie supérieure au niveau du raccord entre ces deux parties.

4. Four de fusion-affinage selon la revendication 1, caractérisé en ce que le raccordement entre les parties supérieure et inférieure est réalisé par emboîtage.

5. Four de fusion-affinage selon la revendication 1, caractérisé en ce que les moyens de chauffage par induction sont propres à amener la partie supérieure à des températures pouvant dépasser 2000°C.

6. Four de fusion-affinage selon la revendication 1, caractérisé en ce qu'il est associé à des moyens de préchauffage pour le démarrage de la fusion.

7. Four de fusion-affinage selon la revendication 1, caractérisé en ce que le fond présente une conicité dirigée vers l'extérieur.

8. Four de fusion-affinage selon la revendication 1, caractérisé en ce que le fond est muni d'une buse de coulée décentrée par rapport à l'axe du four.

9. Four de fusion-affinage selon la revendication 1, caractérisé en ce qu'il est associé à des moyens pour verser une composition à l'état solide à sa partie supérieure.

## Claims

1. A melting-refining heater whose lower, non heated, portion (1) includes a highly isolating refractory wall and whose upper portion (2) is of the cold wall type and is inductively heated, the bottom being also constituted by a refractory material.

2. The melting-refining heater of claim 1, wherein the ratio between the height of the upper portion and the height of the lower portion is between 2:1 and 1:2.

3. The melting-refining heater of claim 1, wherein the inner wall of the lower portion protrudes toward the inside of the heater with respect to the inner wall of the upper portion at the coupling of said two portions.

4. The melting-refining heater of claim 1, wherein the upper and lower portions are assembled by interlocking.

5. The melting-refining heater of claim 1, wherein induction heating means are adapted to bring the upper portion at temperatures that may exceed 2000° C.

6. The melting-refining heater of claim 1, associated with pre-heating means for starting melting.

7. The melting-refining heater of claim 1, wherein the bottom has a tapered portion which is turned externally.

8. The melting-refining heater of claim 1, wherein the bottom has a pouring nozzle disposed eccentrically with respect to the axis of the heater.

9. The melting-refining heater according to claim 1, associated with means for pouring a solid-state composition at its upper portion.

## Patentansprüche

1. Schmelz-Raffinierofen für Glas, dessen unterer, nicht geheizter Teil (1) eine hitzebeständige, stark isolierende Wand aufweist und dessen oberer Teil (2) vom Typ mit kalter Wand ist und durch Induktion geheizt wird, wobei der Boden in gleicher Weise aus einem hitzebeständigen Material besteht.

2. Schmelz-Raffinierofen gemäß Anspruch 1, dadurch gekennzeichnet, daß das Verhältnis zwischen der Höhe des oberen Teils und der Höhe des unteren Teils von 2/1 bis 1/2 beträgt.

3. Schmelz-Raffinierofen gemäß Anspruch 1, dadurch gekennzeichnet, daß die innere Wand des unteren Teils im Verhältnis zur inneren Wand des oberen Teils auf der Höhe der Verbindung zwischen den beiden Teilen zum Inneren des Ofens hin übersteht.

4. Schmelz-Raffinierofen gemäß Anspruch 1, dadurch gekennzeichnet, daß die Verbindung zwischen dem oberen und unteren Teil durch Einsetzen verwirklicht wird.

5. Schmelz-Raffinierofen gemäß Anspruch 1, dadurch gekennzeichnet, daß die Induktionsheizeinrichtungen dazu geeignet sind, den oberen Teil auf Temperaturen zu erhitzen, die 2000°C überschreiten können.

6. Schmelz-Raffinierofen gemäß Anspruch 1, dadurch gekennzeichnet, daß er Einrichtungen zum Vorheizen zum Ingangsetzen des Schmelzens aufweist.

7. Schmelz-Raffinierofen gemäß Anspruch 1, dadurch gekennzeichnet, daß der Boden eine nach außen gerichtete Konizität aufweist.

8. Schmelz-Raffinierofen gemäß Anspruch 1, dadurch gekennzeichnet, daß der Boden mit einem in bezug auf die Achse des Ofens dezentriert angeordneten Gießrohr versehen ist.

9. Schmelz-Raffinierofen gemäß Anspruch 1, dadurch gekennzeichnet, daß er mit Mitteln ausgerüstet ist, eine feste Zusammensetzung in seinen oberen Teil zu schütten.
